# EUROPEAN PATENT SPECIFICATION

(11) **EP 3 448 820 B1**
(45) Date of publication and mention of the grant of the patent: **12.07.2023**
(21) Application number: 17721435.0
(22) Date of filing: 26.04.2017
(51) Int. Cl.: C03C 17/22, C03C 17/25, C03C 17/30

(54) **CORROSION RESISTANT COATED GLASS SUBSTRATE**
KORROSIONSBESTÄNDIGES BESCHICHTETES GLASSUBSTRAT
SUBSTRAT EN VERRE REVÊTU RÉSISTANT À LA CORROSION

(30) Priority: 26.04.2016 GB 201607215
(43) Date of publication of application: 06.03.2019
(73) Proprietor: Pilkington Group Limited, Nr. Ormskirk, Lancashire L40 5UF (GB)
(72) Inventor: HURST, Simon James, Runcorn Cheshire WA7 1QW (GB); VARMA, Karikath Sukumar, Southport Merseyside PR8 2BE (GB); COLLEY, Anna Louise, Prescot Merseyside L35 4LT (GB); CHEETHAM, Kieran James, Netherton Bootle Merseyside L30 7QH (GB); HARRIS, Peter Michael, Chester Cheshire CH2 4DT (GB); OLIVER, Simon Paul, Chester Cheshire CH3 5RN (GB)
(74) Representative: Teasdale, Nicola Joanne
(86) International application number: PCT/GB2017/051168
(87) International publication number: WO 2017/187173

(56) References cited:
- EP-A1- 2 559 670
- EP-A2- 0 322 258
- WO-A1-2016/166527
- WO-A1-2016/174411
- US-A- 5 221 352
- US-A- 5 798 142
- US-A1- 2005 084 718
- US-A1- 2011 244 153
- US-A1- 2015 060 444

## Description

The present invention relates to corrosion-resistant coated glass substrates, to processes for producing corrosion-resistant coated glass substrates, to uses of dense silica layers as corrosion-resistant coatings on glass substrates and to bath screens and/or a shower screens comprising corrosion-resistant coated glass substrates.

Coatings on substrates, especially glass substrates, may be used to modify the properties of the substrate. A number of methods may be used to deposit coatings, including many liquid based methods such as spin coating, dip coating, spray coating and various printing techniques.

WO-A-2016/001661 discloses a method of planarising a surface of a coating on a glass pane.

EP-A-0 942 351 discloses glass substrates with anti-microbial properties having a coating containing silver particles and a silicon-containing binder.

Glass in warm and moist or wet environments tends to become increasingly difficult to clean with time and becomes dull and hazy in appearance. This results from the relatively harsh conditions to which glass is subject in a moist or wet environment. Warm and moist environments can cause spotting, discoloration and corrosion to the surface of the glass. Hard water, soap scum and cleaning agents can worsen the problem. Corrosion of glass leads to irreversible damage to the glass surface.

Glass corrosion happens in two stages. The first stage is aqueous corrosion, caused by water in contact with the glass surface and involves alkali ion leaching from the glass. The second stage involves attack under even relatively mild alkaline conditions leading to dissolution of the glass surface. Cleaning agents used to clean glass surfaces and detergents and soaps may be mildly or strongly alkaline.

There have been attempts to provide surface treatments and/or coatings on glass which reduce or prevent glass corrosion.

JP-A-H08208275 discloses weather and water resistant glass articles having the glass surface etched with hydrofluoric acid to a depth of around 4 µm to 6 µm and then treated with an organic silazane system to render the surface water repellent.

EP-A-2647606 relates to glass bath or shower screens intended to suffer from less limescale or corrosion by using silica layers deposited by sputtering. The document discloses that doping of the silica by greater than 8 atom % is necessary to prevent corrosion of glass.

EP-A-2559670 discloses anti-corrosion coatings on glass made of alumina, titania, zirconia, or magnesium fluoride with controlled porosity.

EP-A-2263980 discloses a Zn dust containing surface treatment for glass.

US-B-5730771 discloses a corrosion protection layer of pyrolytic mixed silica/titania deposited using a titanium chelate precursor.

WO-A-2013/003130 discloses a protective film (for example a shower glass door) of a sacrificial film containing diamond like carbon (DLC) and Zn, AlN_{y}, ZnNₓ or ZrO₂. The film is intended to undergo heat treatment before use.

US-A-2004/023080 discloses a protective coating over a functional coating, the protective coating is sputtered and has two layers of Al₂O₃ containing SiO₂ and SiO₂ containing Al₂O₃.

It is an aim of the present invention to address the problems with known products or methods and to produce a glass substrate with no tendency or a reduced tendency to corrode.

In a first aspect, the present invention accordingly provides a corrosion-resistant coated glass substrate suitable for use in a humid environment according to claim 1.

Preferably in the corrosion-resistant coated glass substrate according to the present invention, the silica layer or each silica comprises 97% or more silica in the form of SiO₂. Even more preferably, in the corrosion-resistant coated glass substrate according to the present invention, the silica layer or each silica layer comprises 98% or more silica in the form of SiO₂.

In relation to the corrosion-resistant coated glass substrate according to the present invention, each silica layer comprises a continuous film.

In addition, in the corrosion-resistant coated glass substrate according to the present invention each silica layer comprises a non-porous film.

Surprisingly, it has been found that such silica layer(s) according to the present invention is/are dense and highly effective at reducing or preventing corrosion of a glass surface. That is, by dense is meant a non-porous, continuous film, such that the present invention provides a continuous film of silica has no perceivable breaks or pitting and which comprises at least 95% silica (SiO₂). More preferably, the continuous film of silica comprises at least 98% silica (SiO₂); even more preferably the continuous film of silica comprises at least 99% silica (SiO₂).

By non-porous is meant a surface without small spaces or pores and therefore a surface which does not allow fluid to pass through, or the migration of ions, (such as sodium ions) from the soda lime silica glass to the outer surface of the coated glass.

A further key feature of the present invention resides in the fact that the non-porous, continuous film of silica is deposited directly on at least one surface of the glass surface, that is, the continuous film of silica is in direct contact with the either one or both surfaces of the glass substrate.

Advantageously, the coated glass or the present invention is preferably corrosion resistant as indicated by a relatively low increase in 'haze' after weathering.

The term haze is used herein as a measure of light scatter and loss in transmission. When the surface of a glass surface has imperfections caused by microscopic structures or textures (in the region of for example 0.01mm wavelength), the surface of the glass substrate can appear milky or hazy, reducing the quality of its overall appearance and hence its commercial value.

Soda lime silicate glass comprises sodium ions, which diffuse from the glass surface. The diffusion is often increased during certain conditions such as weathering. The sodium ions then for example react with moisture present as a result of the weathering and form sodium hydroxide. The sodium hydroxide may then attack the surface of the glass substrate surface causing damage to the surface and hence a subsequent increase in the haze appearance of the glass.

In accordance with the present invention, the inventors have found that the use of a silica coating applied directly to one or both surfaces of the surface of the glass substrate is able to stem or prevent corrosion of the glass substrate surface, primarily by for example, blocking the diffusion of sodium ions, and other alkali ions.

The silica coating applied directly to the glass substrate surface is therefore able to act as a 'sacrificial layer' to prevent exposure of the glass surface to the weathering conditions.

Weathering conditions may be accelerated by high humidity, heat or hot/cold cycles. For testing purposes weathering may be simulated by maintaining glass substrates at an elevated temperature in high humidity for predetermined periods.

Thus, preferably the corrosion-resistant coated glass substrates according to the present invention exhibit a haze increase of 55% or below after 50 days at 98% relative humidity and 60 °C; more preferably 35% or below after 50 days at 98% relative humidity and 60 °C; and most preferably 24% or below after 50 days at 98% relative humidity and 60 °C.

Usually, and preferably, the measured haze (using for example a haze meter) of the coated glass will be 25% or below after 50 days at 98% relative humidity and 60 °C; preferably 20% or below after 50 days at 98% relative humidity and 60 °C; more preferably 15% or below after 50 days at 98% relative humidity and 60 °C; even more preferably 10% or below after 50 days at 98% relative humidity and 60 °C; and most preferably 5% or below, after 50 days at 98% relative humidity and 60 °C.

It is preferred that the surface of the glass substrate has not previously been treated with an etching composition (for example hydrofluoric acid).

Each silica layer has a thickness of 75 nm or higher.

For a coated glass substrate according to the present invention each silica layer has a thickness of 260 nm or lower.

Such thicknesses are advantageous because they provide good corrosion protection and are ideally suited for use in conditions were heat and humidity are a particular problem, such as for example bath and shower screens.

The silica layer in the coated glass substrate according to the present invention will preferably have a refractive index in the range 1.42 to 1.55; preferably 1.45 to 1.53; more preferably 1.48 to 1.53.

It is preferred also that the silica layer applied directly to one or both sides of the glass substrate is the only layer of the coating.

Also in relation to the coated glass substrate according to the present invention the silica layer or each silica layer preferably comprises nitrogen in an amount of 5 % or less. More preferably the silica layer or each silica layer comprises nitrogen in an amount of 3 % or less.

Even more preferably, in the coated glass substrate according to the present invention the silica layer or each silica layer comprises nitrogen in an amount of 2 % or less.

It is also preferred that the silica or each silica layer in the coated glass substrate according to the present invention is/are undoped.

In addition, the silica layer or each silica layer is/are preferably the only coating on the glass substrate.

It is preferred also, that the glass substrate according to the present invention is toughened glass. Toughened glass substrates are particularly advantageous because they enhance user safety in for example shower or bath screens and other applications of the present invention.

Toughened glass is manufactured by subjecting the final desired size of glass to a heating and cooling treatment. The heating and cooling treatment sets up high compressive stresses at the surface of the glass, and balancing tensile stresses in the centre of the glass, which increases the overall strength of the glass. The result is a glass substrate that is five times stronger than non-toughened or annealed glass of the same thickness.

The high compressive surface stresses give the glass its increased resistance to mechanical and thermal stresses. It may however, break under extreme loads or by severe impact. When it is broken, toughened glass shatters into small blunt-edged fragments thereby reducing the risk of personal injury. Toughened Safety Glass provides an economical and proven solution, especially where national standards or Codes of Practice specifically require the use of safety glazing material. The use of toughened glass is required in for example but not limited to: passageways, areas of high pedestrian traffic, doors and adjacent panels, shower and bath enclosures, balconies and barriers.

Toughened Safety Glass product features include:
i) up to five times stronger than non-toughened or annealed glass of the same thickness;
ii) the ability to heat soak the glass for extra confidence in use;
iii) a reduction in the risk of thermal stress breakage of the glass exposed to solar radiation;
iv) conforms to all EN 12150-1 requirements and is CE marked in accordance with EN 12150-2 incorporated herein by reference;
v) achieves Class 1 to EN 12600 (incorporated herein by reference) with a mode of breakage type C;
vi) thicker glass achieves the highest classification of 1 (C) 1 to EN 12600 (incorporated herein by reference).

It is important therefore that the coated glass substrates prepared according to the present invention are preferably able to meet the demanding optical performance requirements required of glazings used in humid environments such as for example bath and shower room applications, and which are also able to withstand the toughening processes required of such glazings.

Corrosion-resistant coated substrates according to the present invention may be produced by liquid coating techniques followed by subsequent curing.

Thus, in a second aspect, the invention provides a process for producing a corrosion-resistant coated glass substrate suitable for use in a humid environment according to claim 8.

Preferably in the process according to the second aspect of the present invention the coating composition is preferably cured using a predetermined curing temperature and/or ultraviolet radiation.

More preferably, the process for producing a corrosion-resistant coated glass substrate according to the present invention provides a silica layer on one or both sides of the glass substrate comprising a thickness as defined above in relation to the first aspect of the present invention.

The substrate may be toughened before application of the coating composition or the coated glass may be toughened after the coating composition has been applied either during the curing step (if the temperature is sufficient) or in a separate toughening step.

However, it is preferred that the substrate may be toughened before application of the coating composition to the coated glass.

The liquid coating composition may further comprise a solvent.

Suitable solvents may be organic solvents which contain do not contain water and no hydroxyl or amine groups. That is, the more preferred solvents are aprotic solvents.

Solvents that may be suitable include for example: aliphatic or aromatic hydrocarbons, halogenated hydrocarbons, esters, such as ethyl acetate or butyl acetate, ketones, such as acetone or methyl ethyl ketone, ethers, such as tetrahydrofuran or dibutyl ether, and mono- and polyalkylene glycol dialkyl ethers (glymes) or mixtures of these solvents.

Preferably the liquid coating composition may further comprise one or more aprotic solvent. The most preferred aprotic solvents include one or more solvents selected from: dialkyl ether, t-butyl methyl ether, tetrahydrofuran, butane, pentane, hexane, cyclohexane, 1,4-dioxane, toluene, xylene, anisole, mesitylene, 1,2-dimethoxybenzene, diphenyl ether.

The liquid coating composition may further comprise two or more aprotic solvents as listed above.

Most preferably the liquid coating composition may further comprise dialkyl ether.

Preferably, the polysilazane is a compound of formula [R¹R²Si-NR³]ₙ, wherein one of R¹, R², and R³ are each independently selected from H and/or C₁ to C₄ alkyl, and n is an integer.

n may be such that the polysilazane has a number average molecular weight in the range 150 to 150,000 g/mol.

For example, the polysilazane may preferably comprise perhydropolysilazane (PHPS), wherein each of R¹, R², and R³ are H). Alternatively the polysilazane may comprise a methyl polysilazane wherein one or more of R¹, R², and R³ is methyl. The preferred methyl polysilazane is wherein each of R¹, R², and R³ is methyl (referred to herein as MPS).

Alternative types of polysilazane may include a compound of formula ( (R⁴R⁵Si-NR⁶)ₒ - (R⁷R⁸Si-NR⁹)ₚ or of [(R⁴R⁵Si-NR⁶] - [R⁷R⁸Si-NR⁹)]_{q}, wherein R⁴, R⁵, R⁶, R⁷ R⁸, and R⁹ are each independently selected from H and/or C₁ to C₄ alkyl, o, p and q are integers. o, p and q may be such that the polysilazane has a number average molecular weight in the range 150 to 150,000 g/mol.

However, the polysilazane according to the first and second aspect of the present invention comprises perhydropolysilazane.

The coating composition may be applied to the surface of the glass substrate a variety of techniques. Contacting the glass substrate surface with the coating composition may, for example, comprise a method selected from dip coating, spin coating, roller coating, spray coating, air atomisation spraying, ultrasonic spraying, and/or slot-die coating. Most preferably, the coating composition is applied to the glass substrate according to the second aspect of the present invention by spin coating, roller coating, spray coating or slot-die coating.

Even more preferably however, the coating composition is preferably applied to the glass substrate by spin coating or slot-die coating.

To improve coating quality, it is advantageous that the process further comprises cleaning one or both surfaces of the glass substrate before depositing the coating composition in direct contact with one or both surfaces of the glass substrate. Cleaning the surface may comprise one or more of: abrasion with ceria; washing with alkaline aqueous solution; washing with deionised water rinse; and/or plasma treatment.

The predetermined curing temperature may be 90 °C or below, for example room temperature (for example about 20 °C) to 90 °C or even at around room temperature. Often however, curing the coating composition on the surface of the substrate preferably comprises heating so that the silica layer fully cures in a relatively short time. This will usually involve heating to a predetermined curing temperature of 90 °C or higher. More preferably the coated glass substrate is heated to a curing temperature of 130 °C or higher. The usual curing temperature is preferably in the range 90 °C to 650 °C or the curing temperature is preferably in the range 130 °C to 650 °C. More preferably the curing temperature is in the range 150 °C to 550 °C. Even more preferably the curing temperature is in the range 200 °C to 520 °C, or 250 °C to 450 °C. Most preferably the curing temperature is in the range 250 °C to 350 °C.

Consequently, for the final product, an additional toughening step may be preferably required after curing to provide enhanced safety. Alternatively, a dry film may be cured during the toughening process itself, thus removing the need for a separate curing step.

The curing time usually depends upon the predetermined curing temperature. A high predetermined curing temperature preferably requires relative shorter curing time, and a low predetermined curing temperature preferably requires a relatively longer curing time. Generally, curing time may be preferably 2 hours or below even at a temperature range of 90 °C or 130 °C.

Curing the coating composition on the surface of the substrate may additionally or alternatively comprise irradiating with ultraviolet (UV) radiation, usually UV C radiation, in particular of a wavelength of 100 nm to 280 nm or below (for example around 208 nm) for 1 second to several minutes, more often from 1 second to 60 second. If curing is by UV irradiation it may not be necessary to heat the substrate, and the predetermined curing temperature may be around room temperature (for example about 20 °C).

It may be preferred to cure the silica layers using a combination of heat and UV irradiation to thereby cure the silica layers faster. The silica layers, when derived from a polysilazane (for example PHPS), cure by evolution of at least ammonia and form dense, that is, non-porous, continuous, silica layers. That is, during the curing process ammonia is lost from the polysilazane solution with the result that the PHPS layer formed on the glass substrate has a higher mechanical and chemical resistance which is due to the more highly densified states, that is, more condensed state, as a result of the higher Si-O-Si and lower OH and Si-OH concentrations in the PHPS silica layers.

The PHPS derived silica films once cured therefore possess less or a reduced amount of silanol groups, thereby retarding the diffusion of hydroxide ions through the glass substrates. Furthermore, the curing process improves the stability of the PHPS silica films on the glass substrates.

The curing process effectively removes in the region of 30 % nitrogen from the polysilazane with the result that a fully cured silica layer of PHPS applied to one or both surfaces of a glass substrate in accordance with the present invention comprises 95 % or more silica; or 97 % or more silica. More preferably, the fully cured silica layer of PHPS applied to one or both surfaces of a glass substrate in accordance with the present invention comprises 98 % or more silica, or even 100 % silica.

UV irradiation has been found by the inventors to result in a particularly rapid cure even through the entire depth of the silica layer according to the present invention. This is evident also with catalysed forms of polysilazane.

A great advantage of using a liquid coating composition comprising polysilazane in accordance with the first and second aspect of the present invention is therefore that the surface of the resulting silica layer becomes 'fully-densified' on curing as nitrogen-containing species, carbon-containing species and water are driven off. The term `fully-densified' used herein refers to a continuous non-porous film with density approaching that of fused silica.

A silica layer having a `fully-densified', non-porous and continuous surface structure is more resistant to corrosion (measured using the haze test previously described above) for at least two reasons. Firstly, the silica layer tends to be physically smoother than silica layers deposited by other methods and is therefore easier to wipe clean. Secondly, the surface of the silica layer tends to have fewer sites at which chemical reactions can take place. In comparison, a silica layer deposited for example from a silicon alkoxide, such as tetraethoxysilane (TEOS) tends to have, even after curing, residual water and hydroxyl groups. As mentioned above, such residual water and hydroxyl groups are thought (without wishing to be bound by any particular theory) to make the silica layer more vulnerable to corrosion.

The inventors have found that contacting the surface of a glass substrate with a liquid coating composition comprising a polysilazane according to the present invention results in a silica layer capable of substantially complete curing, such as for example, curing the silica layer at 500 °C for 1 hour results in a residual nitrogen content below 2 atom %. Consequently, a coated glass substrate having a cured silica layer of thickness greater than 12 nm, or a thickness as described in relation to the first aspect of the present invention is resistant to corrosion when placed or used in a harsh environment such as for example showers or bathrooms.

The concentration of polysilazane in the coating composition may be adjusted to an appropriate level. A coating composition of relatively high concentration may be used to deposit a relatively thick layer comprising silica. Thus, the polysilazane in the liquid coating composition according to the second aspect of the present invention may be at a concentration in the range 0.5% to 80% by weight in the coating composition. Preferably the polysilazane may be at a concentration in the range 0.5% to 20% by weight. More preferably the polysilazane may be at a concentration in the range 0.5% to 10% by weight. Most preferably the polysilazane may be at a concentration in the range 1% to 5% by weight.

Such concentrations will therefore lead to dense silica layers on one or both sides of the glass substrate which comprise 95% or more silica in the form of SiO₂. More preferably the or each silica layer comprises 97% or more silica in the form of SiO₂.

Most preferably the or each silica layer comprises 98% or more silica in the form of SiO₂.

The process according to the second aspect of the present invention may be controlled (for example by adjusting the concentration, volume applied, number of applications, and/or time of application of the coating composition) to vary the thickness of the deposited coating comprising silica. Thus, each silica layer is deposited to a thickness of 75 nm or higher.

Coatings which are too thick for example above 5 µm, may be subject to cracking during cure or subsequent use.

For a coated glass substrate according to the present invention each silica layer has a thickness of 260 nm or lower.

Such thicknesses are advantageous because they provide good corrosion protection and are ideally suited for use in conditions were heat and humidity are a particular problem, such as for example bath and shower screens.

In a third aspect, the present invention accordingly provides use of a dense or `fully-densified', non-porous and continuous silica layer as described above in relation to the first aspect of the present invention, deposited directly on one or each surface of a substrate of soda lime silica glass as a corrosion-resistant coating as described above in relation to the second aspect of the present invention.

Preferably, the corrosion-resistant silica coating on a glass substrate is such that the coated glass substrate exhibits a haze increase of 24% or below after 50 days at 98 % relative humidity and 60 °C.

In a fourth aspect, the present invention provides a bath screen and/or a shower screen comprising a corrosion-resistant coated glass substrate as described above in relation to the first aspect of the present invention or as produced and described above in relation to the second aspect of the present invention.

Preferably, the bath and/or shower screen further comprises fixings to fix the bath screen and/or a shower screen in position for use. Usually, the fixings will comprise adhesive portions or mechanical attachment portions to attach the fixings to the splash screen.

Such fixings may include hinge fixings. The fixings may be attached to the splash screen through adhesion (for example adhesives pads attached to at least one surface of the splash screen and to the fixings) and/or through mechanical attachment, (for example bolts) extending through or attached to holes in the splash screen. Such holes may be drilled holes.

The substrate may be adapted to hold fixings to fix the splash screen in position for use. The substrate may be adapted to hold fixings by having at least one hole (for example one hole, two holes, three holes, four holes or more than four holes) drilled through the substrate.

It is preferred, for reasons of safety that the glass substrate according to the third or fourth aspect of the present invention is toughened. If the substrate has at least one hole, drilled through the substrate, the substrate may be toughened after the hole(s) are drilled.

The substrate is preferably edge-worked as described in any of the methods in Edge Working to DIN 1249 Part 11, incorporated herein by reference.

The present invention will now be described by way of example only, and with reference to, the accompanying drawings, in which:
Figure 1 shows a photograph of five samples, four coated samples and one uncoated sample after treatment for 50 days in a humidity cabinet at 98 % humidity and 60 °C.
Figure 2 shows a photograph of the same five samples as in Figure 1 (denoted as letters (a) to (e)) after 8 days in the humidity cabinet at 98 % humidity.
Figure 3 is a scanning electron micrograph of Example 1 from Figure 1 taken at 80° sample tilt.
Figure 4 is a scanning electron micrograph of Example 4 from Figure 1 taken at 90° sample tilt.
Figure 5 is a line chart showing the residual elemental nitrogen content in perhydropolysilazane (PHPS) derived silica coatings after heat treatment at various temperatures for 1 hour.
Figure 6 is a line chart showing the residual elemental nitrogen content in perhydropolysilazane (PHPS) derived silica coatings after heat treatment at 500 °C for various periods of time.

The present invention will now be described by way of example only, with reference to, the following non-limiting examples.

### Examples

### Preparation of Silica Layers.

Silica layers were deposited onto a soda lime glass substrate using diluted or undiluted 20% by weight stock solution in dibutyl ether (DBE) of perhydropolysilazane (PHPS) (available from Merck). During coating operations the stock solution was diluted with DBE at dilution ratios ranging from 1: 1 to 1:12.

The substrate surface was cleaned prior to coating using combinations of ceria scrub, 2% potassium hydroxide (KOH) wash, deionised water rinse and air dry. Plasma treatment was also undertaken as required to remove remaining organic contaminants from the surface to reduce the contact angle of the substrate before coating to less than or equal to 5°.

In the following examples the coating solution was applied to the substrate surface by spin coating (other liquid coating methods may alternatively be used) and cured using elevated temperature.

Spin coating is a procedure used to deposit uniform thin films (that is, films in the range 10 nm to 10 µm) to flat substrates. Usually a small amount of coating material is applied on the centre of the substrate, which is either spinning at low speed or not spinning at all. The substrate is then rotated at high speed in order to spread the coating material by centrifugal force. A machine used for spin coating is called a spin coater, or simply spinner.

Rotation is continued while the fluid spins off the edges of the substrate, until the desired thickness of the film is achieved. The applied solvent is usually volatile, and simultaneously evaporates as rotation continues. Therefore, the higher the angular speed of spinning, the thinner the film. The thickness of the film also depends on the viscosity and concentration of the solution and the solvent.

As an alternative or as an addition to curing at elevated temperature, ultraviolet radiation (for example short wavelength UV C using a mercury or iron discharge lamp) may be used to cure the coatings to give a silica layer.

Volumes of 2 ml of polysilazane solution of pre-determined concentration were applied directly to the cleaned surface of a glass substrate. The substrate was 'spun- up' at an acceleration of 1000 rpm/s to 2000 rpm. The substrates were subsequently heated for 1 hour at relatively low, medium or high temperature (1 hour heat up, 1 hour hold, and around 8 hours cool down).

Examples 1 to 5 were deposited using perhydropolysilazane (PHPS) as the silica precursor as indicated in Table 1.

**Table 1.**

| Example | PHPS Coating Solution Concentration (% PHPS in DBE) | Thickness (nm) (SEM) | Cure Temperature (°C) | ISO 9050 Tvis (%) | Haze (%) | ISO 9050 Rvis (%) | Water Contact Angle (°) |
|---|---|---|---|---|---|---|---|
| Glass substrate only | - | - | 0 | 89.8 | 0.14 | - | 26.3 |
| 1 | 8 | 103 | 500 | 89.7 | 0.35 | 7.6 | 39.8 |
| 2 | 15 | 181 | 500 | 89.4 | 0.45 | 8.4 | 39.8 |
| 3 | 9 | 112 | 300 | 90.3 | 0.25 | 7.6 | 94.4 |
| 4 | 11 | 150 | 300 | 89.5 | 0.17 | 8.1 | 88.2 |
| 5 | 9 | 111 | 150 | 89.7 | 0.32 | 8.2 | 88.2 |

| | | | | | | | |
|---|---|---|---|---|---|---|---|
| 'Tvis' is visible light transmission and 'Rvis' is visible light reflectance | | | | | | | |

### Characterisation of Examples

The silica coated substrates examples were tested for optical properties (according to ISO 9050) water contact angle (50 µl deionized water droplet) and resistance to humidity-induced corrosion.

Scanning electron microscopy (SEM) was also performed using a Philips XL30 FEG operating in plan and cross-section mode at varying instrument magnification and tilt angle (80 ° and 90 °) in order to assess the thickness of the silica coatings.

That is, the examples were imaged using scanning electron microscopy (SEM) and images of the specimens were captured at varying instrument magnifications using both 80° and 90° specimen tilt. Specimens were taken from the sample, mounted onto aluminium stubs in cross-section and ultrasonically cleaned in methanol for 10 seconds. The cleaned specimens were coated with a thin layer of platinum (providing a uniform conductive surface) prior to examination using the SEM. The images of the specimens from the Examples showed amorphous dense, non-porous and continuous coating layers with a very smooth surface, that is, a Sa value of less than 2nm over a 5µm x 5µm area measured by Atomic Force Microscopy, where Sa is a measure of the roughness of an area of a surface. Measurements taken from the SEM 90° tilt images were used to determine average coating thickness.

The optical properties of the samples were determined and are indicated in Table 1 above. The refractive index of the silica layers was determined by computer modelling and found to be from 1.46 to 1.52. That is, optical modelling was performed using: i) the transmission and reflection spectra data measured using a Perkin Elmer Lambda spectrometer; and ii) the coating thickness data from the SEM measurements; which were then processed using CODE software available from W. Theiss Hard and Software (http://www.mtheiss.com).

The refractive index (at 550 nm) for a test coating of silica was modelled by using a 2% PHPS solution, 1000 rpm, 10 seconds spin-time with curing at 200 °C for 2 hours, to deposit a clear silica PHPS coating on a test substrate of glass having a 49 nm thick TiOₓ coating to ensure good optical contrast. Optical modelling was found to provide a good fit to 49.8 nm thick silica coating of refractive index 1.518.

The results of the optical measurements, water contact angle, and coating thickness from SEM are as indicated in Table 1 for Examples 1 to 5 deposited after 2 hours curing time, together with comparative results for an uncoated float glass substrate.

It can be seen from the results in Table 1 that the examples of silica coatings deposited from PHPS/DBE solutions exhibit high optical transmission and colour neutrality, as required by coated glass substrates used in for example shower enclosures. Furthermore, by varying the PHPS : DBE ratio, a range of silica coating thicknesses can be obtained. This allows the silica coating to be 'fine-tuned' to meet end user requirements.

### Humidity induced corrosion testing

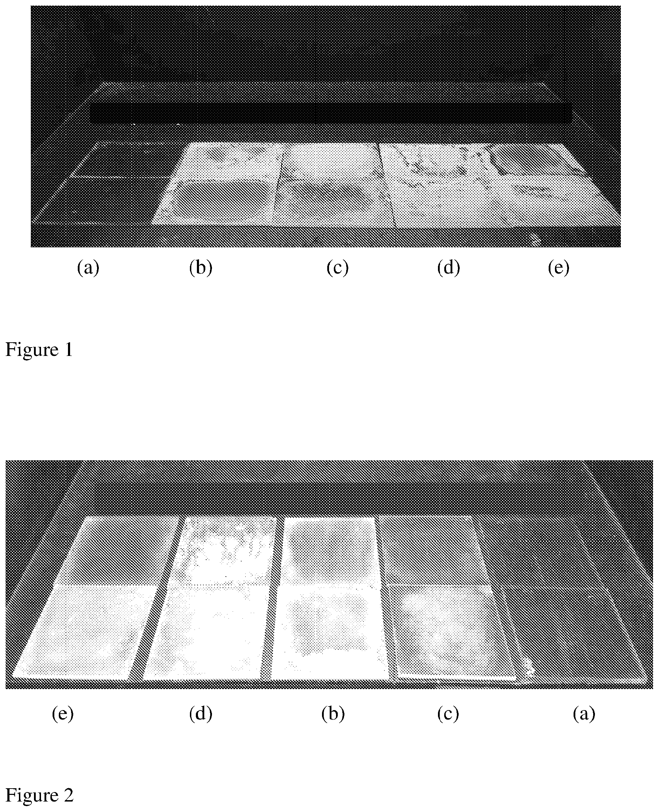

Figure 1 shows a photograph of five samples, four coated samples and one uncoated sample, after treatment for 50 days in a humidity cabinet at 98% humidity and 60 °C .

The samples are:
(a) Example 1;
(b) uncoated toughened float glass; and
   three commercially available treatments marketed for protecting glass surfaces, each coated according to the manufacturers' instructions on the same type of glass substrate as for Example 1. The three commercially available treatments are:
(c) BalcoNano (trade mark);
(d) Ritec Clearshield (trade mark); and
(e) Liquid Glass (trade mark).

The four coated samples (Example 1 and the three commercial coated glass samples, BalcoNano (trade mark), Ritec Clearshield (trade mark), and Liquid Glass (trade mark) and the toughened uncoated float glass sample were placed in a humidity cabinet at around 98% humidity and 60 °C for 50 days. Photographs of the samples are shown in Figure 1. It can be seen from Figure 1 that Example 1 is much less corroded than the other samples.

Photographs of the four coated samples and the toughened uncoated float glass after 8 days in the humidity cabinet at around 98% humidity are shown in Figure 2. The top 5 samples were removed from the cabinet and wiped with a wet cloth then returned after 3 days. The samples were wiped again prior to recording the image depicted in Figure 2. Again, it can be seen from Figure 2 that Example 1 is much less corroded than the other samples.

The haze of the samples before and after humidity testing for 50 days was measured using a haze meter (BYK Gardner Haze-Gard Plus, in compliance with ASTM D 1003 haze measurement standard incorporated herein by reference). The results are indicated below in Table 2.

**Table 2**

| | **Sample** | **Haze range after weathering (%)** | **Average haze after weathering (%)** | **Average haze before weathering (%) (*estimate)** |
|---|---|---|---|---|
| a | Example 1 | 2.51 - 4.37 | 3.5 | 0.3 |
| c | BalcoNano ^{™} commercial wipe on treatment | 62.7 - 72.2 | 69.5 | <1* |
| b | Toughened Float Glass (untreated) | 57.1 - 80.0 | 73.1 | 0.14 |
| d | Ritec Clearshield ^{™} commercial treatment | 78.7 - 83.1 | 80.6 | <1* |
| e | Liquid Glass | N/A | N/A | N/A |

The results of Table 2 show that Example 1 exhibited a lower haze after weathering (3.5%) compared to the other samples (all with a haze value greater than 69 %). That is, the haze values recorded for Example 1 are very different to the haze values recorded for the other samples. Haze is a good indicator of the degree of weathering (the higher the value the worse the result). A haze value of 3.5 % for Example 1 after accelerated weathering, indicates that Example 1 is able to offer excellent performance in for example a shower enclosure. Haze levels greater than 69 % are not acceptable, as any shower screen formed therefrom would exhibit limited transparency and would not be aesthetically pleasing to the end user.

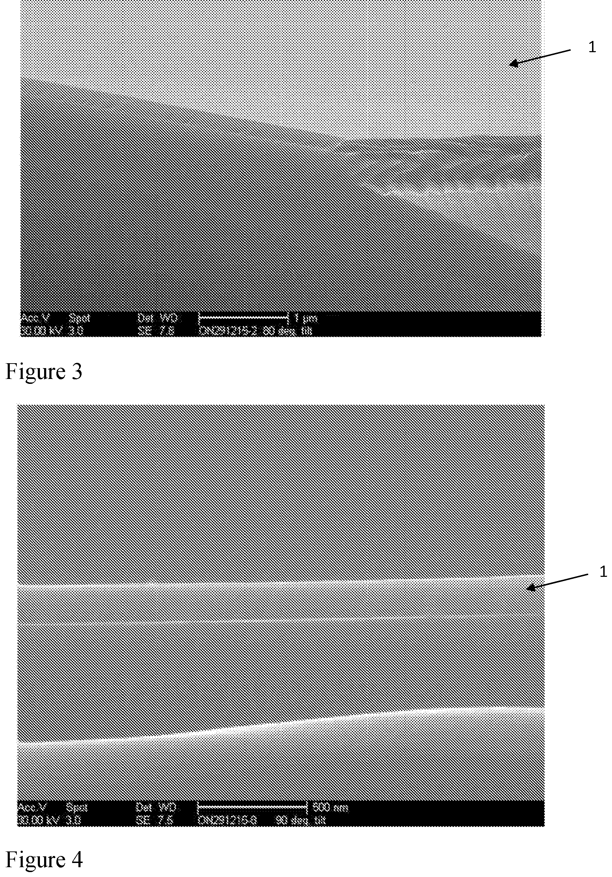

Figure 3 is a scanning electron micrograph of Example 1 from Figure 1 taken at 80° sample tilt. It can be seen from Figure 3 that there is a dense smooth silica layer deposited on the glass surface denoted by (1)

Figure 4 is also a scanning electron micrograph of Example 4 at 90° sample tilt also showing a dense smooth silica layer, again denoted by (1).

It can be seen also from Figures 3 and 4 that the silica layer is continuous, without defects and without pinholes. This is required in order to prevent moisture ingress into the silica coating and also, subsequent moisture ingress to the interface formed between the silica layer and the glass surface. If the latter were to occur, then it is likely that moisture could and would attack the silica layer from both sides. In addition, moisture attack at the silica/glass interface could also cause delamination and coating failure in a humid environment such as a shower enclosure.

### Hardness of Coatings

The hardness of the silica layers in Examples 1 to 5 were tested using the pencil hardness test. The pencil hardness test, also referred to as the Wolff-Wilbom test, uses the varying hardness values of graphite pencils to evaluate a coating's hardness. An Elcometer 501 Pencil Hardness Tester was used to ensure that the cylindrical pencil lead is maintained at a constant angle of 45 ° and exerts a force of 7.5N (1.68lbF). The pencil lead, prepared beforehand using a special sharpener and abrasive paper, was inserted into the Elcometer 501 hardness tester and pushed over the smooth, flat coated surface. The lowest hardness value of the pencil which marks the coating determines the coating's hardness rating.

The hardness of the coatings was very high at 7H to 9H+ before a mark was found on the samples. Hardness was found to generally increase with curing temperature and length of cure.

### Additional examples prepared for a range of silica coating thicknesses derived from polysilazane (PHPS)

A further set of examples were prepared with a variety of silica coatings thicknesses prepared by spin coating to cover the thickness range 23nm to 144nm followed by curing. These coatings were prepared using polysilazane (PHPS) and dibutylether solutions. The spin coating conditions are provided in Table 3.

**Table 3 - Spin coating conditions**

| | |
|---|---|
| PHPS:DBE dispensed volume | Around 2 ml |
| Spin speed | 2000 rpm |
| Acceleration | 1000 rpm/sec. |
| Curing Conditions | 1 hour at 500°C (around 1 hour heat up, 1 hour hold at required temperature and around 8 hour cool down |
| Dilution range of the PHPS : DBE solutions required to cover the silica coating thickness range | 1:12.2 - 1:0.795 |

Durability tests were performed on the coated glass substrates to assess the coatings according to Architectural (EN1096) and Automotive (TSR 7503G) glass standards, incorporated herein by reference. The results of the durability tests are presented in Tables 4, 5 and 6.

Durability performance was characterised by:
(i) The change in visible transmission, ΔTvis, (measured according to EN410 incorporated herein by reference) following each durability test compared to an untested reference sample.
(ii) The change in water contact angle following each durability test compared to an untested reference sample.
(iii) The change in haze (light scatter) following abrasion testing (after 20 cycles using a felt pad attached to a 500 g weight) compared to an untested reference sample.

The durability testing confirmed the acceptable performance of the coated substrates and hence the coatings for use in for example a shower enclosure.

**Table 4 - Durability test results investigating changes in light transmission over a range of test conditions**

| Sample | Silica Thickness (nm) | Reference (% T vis) | Acid Test (%T vis) | ΔT vis | Anti-Freeze Test (%T vis) | ΔT vis | Alkali Test (%T vis) | ΔT vis | Salt Spray (%T vis) | ΔT vis | En. Cycle (%T vis) | ΔT vis | Kerosene (% Tvis) | ΔT vis |
|---|---|---|---|---|---|---|---|---|---|---|---|---|---|---|
| 1 | 23 | 89.3 | 89.3 | 0 | 89.3 | 0 | 89.4 | 0.1 | 86.1 | -3.2 | 89.4 | 0.1 | 89.4 | 0.1 |
| 2 | 47 | 89.53 | 89.8 | 0.27 | 89.3 | -0.23 | 89.7 | 0.17 | 86.1 | -3.43 | 89.8 | 0.27 | 89.9 | 0.37 |
| 3 | 93 | 90.2 | 90.2 | 0 | 89.9 | -0.3 | 90 | -0.2 | 89.9 | -0.3 | 90 | -0.2 | 90.2 | 0 |
| 4 | 144 | 89.11 | 89.3 | 0.19 | 89.3 | 0.19 | 89.3 | 0.19 | 85.1 | -4.01 | 89.6 | 0.49 | 89.6 | 0.49 |

The acid test involved exposing a silica coated substrate (100/50mm) to 0.1N sulphuric acid (H₂SO₄) for a period of 2 hours.

The alkali test involved exposing a silica coated substrate (100/50mm) to 0.001N sodium hydroxide (NaOH) for a period of 2 hours.

### The anti-freeze test involves

The salt water spray test involved exposing a silica coated substrate (100/100mm) to salt water for 21 days.

The Environmental cycle test (En Cycle) involved exposing a silica coated substrate (100/100mm) to changes in temperature ranging from 80 degrees C to minus 40 degrees C for 21 days.

The Kerosene test involved exposing a silica coated substrate (100/50nm) to Kerosene for a period of 2 hours.

It can be seen from Table 4 that whilst all the samples changed properties following the durability tests, the magnitude of the change (ΔT vis) for the coated samples is considered to be an acceptable level of performance for same for use in a shower enclosure. That is, the tests indicate that the silica coating of the present invention is robust enough to survive an end use application in for example a shower or bathroom environment.

**Table 5 - Durability test results investigating changes in contact angle over a range of test conditions**

| Sample | Silica Thickness (nm) | Reference Contact Angle (CA °) | Acid Test (°) | ΔCA | Anti-Freeze Test (°) | ΔCA | Alkali Test (°) | ΔCA | Salt Spray (°) | ΔCA | En. Cycle (°) | ΔCA | Kerosene (°) | ΔCA |
|---|---|---|---|---|---|---|---|---|---|---|---|---|---|---|
| 1 | 23 | 18.50 | 38.46 | 19.96 | 34.77 | 16.27 | 37.83 | 19.34 | 28.66 | -9.80 | 23.08 | -11.69 | 31.58 | 13.08 |
| 2 | 47 | 49.31 | 48.54 | -0.77 | 52.95 | 3.64 | 25.21 | -24.10 | 30.88 | -17.66 | 30.26 | -22.69 | 46.89 | -2.42 |
| 3 | 93 | 41.46 | 39.51 | -1.95 | 61.48 | 20.02 | 34.34 | -7.11 | 22.74 | -16.76 | 66.11 | 4.63 | 45.35 | 3.89 |
| 4 | 144 | 46.81 | 41.38 | -5.42 | 27.78 | -19.03 | 45.88 | -0.93 | 27.86 | -13.52 | 56.96 | 29.18 | 51.36 | 4.55 |

It can be seen in Table 5 that the contact angle of the silica coating surface in each of the samples changes following durability testing (change in contact angle, ΔCA). This change indicates that the silica coating has changed following each durability test. In common with the optical assessment reported in Table 4, the magnitude of the change (ΔCA) is considered an acceptable level of performance for use in a shower enclosure. The tests indicate that the silica coating is robust enough to survive end use in a shower. That is, the above tests also indicate that the silica coating of the present invention is robust enough to survive an end use application in for example a shower or bathroom environment.

**Table 6 - Durability test results (Haze change)**

| Sample | Silica Thickness (nm) | Average Haze Before Test (%) | Average Haze After Test (%) | ΔHaze (%) |
|---|---|---|---|---|
| 1 | 23 | 3.22 | 3.51 | 0.29 |
| 2 | 47 | 3.27 | 3.49 | 0.22 |
| 3 | 93 | 3.16 | 3.37 | 0.21 |
| 4 | 144 | 3.24 | 3.74 | 0.5 |

It can be seen from Table 6 that all samples exhibit only a small change in haze (ΔHaze (%) after durability testing compared to before testing. Haze is a good indicator of the degree of weathering (with high haze values and high delta haze values before and after testing indicating poor results). In Table 6 all of the examples show acceptable haze and acceptable ΔHaze performance, and therefore, all of the samples may be used in a shower enclosure. That is, the above haze results confirm that the silica coating of the present invention are robust enough to survive an end use application in for example a shower or bathroom environment.

### Determination of levels of nitrogen and silica in the perhydropolysilazane coatings.

Silica coatings on glass were prepared by spin coating from a perhydropolysilazane (PHPS) precursor and were exposed to a range of heat treatments. Following each heat treatment the coatings were analysed using X-ray Photoelectron Spectroscopy (XPS) to measure the residual nitrogen content in the coatings. The elemental nitrogen content for each heat treatment condition is listed in Table 7 below.

**Table 7**

| Heat Treatment Temperature (degrees C) | Heat Treatment Time (minutes) | Nitrogen Content (%) |
|---|---|---|
| Room Temp | 60 | 17.4 |
| 200 | 60 | 21.2 |
| 400 | 60 | 7.0 |
| 500 | 10 | 10.8 |
| 500 | 20 | 10.2 |
| 500 | 40 | 2.2 |
| 500 | 60 | 1.2 |
| 500 | 1080 | 0 |
| 600 | 60 | 0.0 |

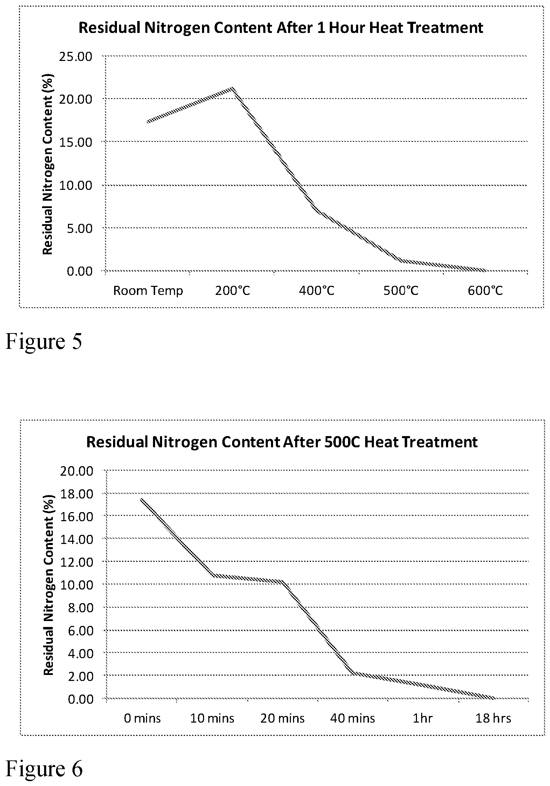

Figure 5 is a line chart showing the residual elemental nitrogen content in perhydropolysilazane (PHPS) derived silica coatings after heat treatment at various temperatures; all heat treatments are for 1 hour. It can be seen that the required level of 0 % nitrogen is achieved for a heat treatment of 500 °C for 1080 minutes, or 600 °C for 60 minutes. A nitrogen level of 1.2%, achieved after 500°C for 60 minutes is considered to be an excellent result.

Figure 6 is a line chart showing the residual elemental nitrogen content in perhydropolysilazane (PHPS) derived silica coatings after heat treatment at 500 degrees C for various periods of time.

From the above results it is apparent that dense non-porous and continuous silica layers deposited from a polysilazane in the form of perhydropolysilazane were, surprisingly, found to protect previously uncoated glass surfaces from humidity induced corrosion.

The coatings were deposited from perhydropolysilazane (PHPS, a polysilazane that transforms to form a layer of SiO₂ upon heat treatment with the loss of at least ammonia). Following deposition, the SiO₂ coatings was cured at low (150 °C), medium (300 °C) or high (500 °C) temperature.

The dense silica layers prepared and tested in accordance with the present invention offer corrosion protection functionality when placed in a humid environment and thereby prevent glass staining. The coated glass substrates prepared in accordance with the present invention are therefore suitable for use in applications in for example shower and bathroom environments. In addition, the coated glass substrates prepared in accordance with the present invention, also increase the warehouse life of the glass when stored prior to sputter cutting, etc., as the glass prepared according to the invention demonstrate improved resistance to humidity at around 98% and 60 °C.

## Claims

1. A corrosion-resistant coated glass substrate suitable for use as a bath screen and/or a shower screen in a humid environment comprising:
i) a substrate of soda lime silica glass; and
ii) a silica layer deposited directly on both surfaces of the glass substrate, wherein:
each silica layer is derived from a liquid polysilazane in the form of perhydropolysilazane;
each silica layer comprises 95% or more silica in the form of SiO₂;
each silica layer comprises a fully-densified continuous, non-porous film; and
each silica layer has a thickness of 75 nm or higher and a thickness of 260 nm or lower.

2. A corrosion-resistant coated glass substrate according to claim 1 wherein the silica layer or each silica layer comprises 97% or more silica in the form of SiO₂, more preferably the silica layer or each silica layer comprises 98% or more silica in the form of SiO₂.

3. A corrosion-resistant coated glass substrate as claimed in claim 1 or 2, wherein the corrosion-resistant coated glass substrate exhibits a haze increase of 24% or below after 50 days at 98% relative humidity and 60 °C.

4. A coated glass substrate as claimed any of the preceding claims, wherein the silica layer or each silica layer has a thickness in the range 20 nm to 250 nm.

5. A coated glass substrate as claimed any of claims 1 to 4 wherein the silica layer or each silica layer has a refractive index in the range 1.42 to 1.55.

6. A coated glass substrate as claimed in any of the preceding claims, wherein the silica layer or each silica layer comprises nitrogen in an amount of 5 % or less, more preferably the silica layer or each silica layer comprises nitrogen in an amount of 3 % or less; and/or wherein the silica layer or each silica layer comprises nitrogen in an amount of 2 % or less.

7. A coated glass substrate as claimed any of the preceding claims, wherein the silica layer deposited directly on each surface of the glass substrate comprises a thickness of 20 nm to 200 nm; and/or wherein the glass substrate is toughened glass; and/or wherein the silica layer or each silica layer is/are the only coating on the glass substrate; and/or wherein the silica layer or each silica layer is/are undoped.

8. A process for producing a corrosion-resistant coated glass substrate suitable for use as a bath screen and/or a shower screen in a humid environment, the process comprising:
i) providing a soda lime silica glass substrate;
ii) providing a liquid coating composition comprising a polysilazane at a concentration of between 0.5 % and 80% by weight;
iii) contacting both surfaces of the glass substrate directly with the coating composition; and
iv) curing the coating composition thereby forming a corrosion-resistant coated glass substrate having a fully-densified, continuous, non-porous silica layer on both sides of the glass substrate with a thickness of from 75 nm or higher and 260 nm or lower; and wherein each silica layer comprises 95% or more silica in the form of SiO₂.

9. A process according to claim 8 wherein the coating composition is cured using a predetermined curing temperature and/or ultraviolet radiation; and/or
wherein the predetermined curing temperature is a temperature of 130 °C or higher, preferably a temperature in the range 130 °C to 650 °C or 150 °C to 550 °C, and more preferably a temperature in the range 250 °C to 520 °C; and/or
wherein the ultraviolet radiation used to cure the coating composition applied directly to one or both surfaces of the glass substrate comprises UV C radiation.

10. A process as claimed in claim 8 or 9, wherein the liquid coating composition comprises a solvent, preferably an aprotic solvent, more preferably dialkyl ether; and/or wherein the polysilazane is a compound of formula [R¹R²Si-NR³]ₙ, wherein one of R¹, R², and R³ are each independently selected from H or C₁ to C₄ alkyl, and n is an integer; preferably wherein the polysilazane comprises perhydropolysilazane.

11. A process as claimed in any one of claims 8 to 10, wherein one or both surfaces of the glass substrate is/are contacted directly with the coating composition by a method selected from: dip coating, spin coating, roller coating, spray coating, air atomisation spraying, ultrasonic spraying, and/or slot-die coating; preferably wherein one or both surfaces of the glass substrate are cleaned before depositing the coating composition with one or more treatments comprising: abrasion with ceria; washing with alkaline aqueous solution; washing with deionised water rinse; and/or plasma treatment.

12. A process as claimed in any of claims 8 to 11, wherein the polysilazane is at a concentration in the range 0.5% to 20% by weight in the coating composition, preferably in the range 0.5% to 10% by weight, more preferably in the range 1% to 5% by weight; and/or wherein the silica layer or each silica layer comprises 97% or more silica in the form of SiO₂, more preferably the silica layer or each silica layer comprises 98% or more silica in the form of SiO₂.

13. Use of a dense silica layer deposited directly on one or both surfaces of a substrate of soda lime silica glass according to any of claims 1 to 7 or according to any of claims 8 to 12 as a corrosion-resistant coating.

14. A bath screen and/or a shower screen comprising a corrosion-resistant coated glass substrate as claimed in any one of claims 1 to 7.

15. A bath screen and/or a shower screen as claimed in claim 14, further comprising fixings to fix the bath screen and/or a shower screen in position for use, preferably wherein the fixings comprise adhesive portions or mechanical attachment portions to attach the fixings to the splash screen.

## Patentansprüche

1. Korrosionsbeständiges beschichtetes Glassubstrat, das zur Verwendung als Badewannenabtrennung und/oder Duschabtrennung in einer feuchten Umgebung geeignet ist, umfassend:
i) ein Substrat aus Kalknatronsilikatglas; und
ii) eine Siliziumoxidschicht, die direkt auf beiden Oberflächen des Glassubstrats abgeschieden ist,
wobei:
jede Siliziumoxidschicht von einem flüssigen Polysilazan in Form von Perhydropolysilazan abgeleitet ist;
jede Siliziumoxidschicht 95 % oder mehr Siliziumoxid in Form von SiO₂ umfasst;
jede Siliziumoxidschicht einen vollständig verdichteten, kontinuierlichen, nicht porösen Film umfasst; und
jede Siliziumoxidschicht eine Dicke von 75 nm oder mehr und eine Dicke von 260 nm oder weniger aufweist.

2. Korrosionsbeständiges beschichtetes Glassubstrat nach Anspruch 1, bei dem die Siliziumoxidschicht oder jede Siliziumoxidschicht 97% oder mehr Siliziumoxid in Form von SiO₂ umfasst, vorzugsweise bei dem die Siliziumoxidschicht oder jede Siliziumoxidschicht 98% oder mehr Siliziumoxid in Form von SiO₂ umfasst.

3. Korrosionsbeständiges beschichtetes Glassubstrat nach Anspruch 1 oder 2, wobei das korrosionsbeständige beschichtete Glassubstrat nach 50 Tagen bei 98 % relativer Luftfeuchtigkeit und 60 °C eine Trübungszunahme von 24 % oder weniger aufweist.

4. Beschichtetes Glassubstrat nach einem der vorhergehenden Ansprüche, bei dem die Siliziumoxidschicht oder jede Siliziumoxidschicht eine Dicke im Bereich von 20 nm bis 250 nm aufweist.

5. Beschichtetes Glassubstrat nach einem der Ansprüche 1 bis 4, bei dem die Siliziumoxidschicht oder jede Siliziumoxidschicht einen Brechungsindex im Bereich von 1,42 bis 1,55 aufweist.

6. Beschichtetes Glassubstrat nach einem der vorhergehenden Ansprüche, bei dem die Siliziumoxidschicht oder jede Siliziumoxidschicht Stickstoff in einer Menge von 5 % oder weniger umfasst, vorzugsweise bei dem die Siliziumoxidschicht oder jede Siliziumoxidschicht Stickstoff in einer Menge von 3 % oder weniger umfasst; und/oder bei dem die Siliziumoxidschicht oder jede Siliziumoxidschicht Stickstoff in einer Menge von 2 % oder weniger umfasst.

7. Beschichtetes Glassubstrat nach einem der vorhergehenden Ansprüche, bei dem die direkt auf jeder Oberfläche des Glassubstrats abgeschiedene Siliziumoxidschicht eine Dicke von 20 nm bis 200 nm umfasst; und/oder bei dem das Glassubstrat vorgespanntes Glas ist; und/oder bei dem die Siliziumoxidschicht oder jede Siliziumoxidschicht die einzige Beschichtung auf dem Glassubstrat ist; und/oder bei dem die Siliziumoxidschicht oder jede Siliziumoxidschicht undotiert ist.

8. Verfahren zur Herstellung eines korrosionsbeständigen beschichteten Glassubstrats, das zur Verwendung als Badewannenabtrennung und/oder Duschabtrennung in einer feuchten Umgebung geeignet ist, wobei das Verfahren umfasst:
i) Bereitstellen eines Substrats aus Kalknatronsilikatglas;
ii) Bereitstellen einer flüssigen Beschichtungszusammensetzung, die ein Polysilazan in einer Konzentration zwischen 0,5 Gew.-% und 80 Gew.-% umfasst;
iii) direktes Inkontaktbringen beider Oberflächen des Glassubstrats mit der Beschichtungszusammensetzung; und
iv) Härten der Beschichtungszusammensetzung, wodurch ein korrosionsbeständiges beschichtetes Glassubstrat gebildet wird, das eine vollständig verdichtete, kontinuierliche, nichtporöse Siliziumoxidschicht auf beiden Seiten des Glassubstrats mit einer Dicke von 75 nm oder mehr und 260 nm oder weniger aufweist; und
wobei jede Siliziumoxidschicht 95 % oder mehr Siliziumoxid in Form von SiO₂ umfasst.

9. Verfahren nach Anspruch 8, bei dem die Beschichtungszusammensetzung unter Verwendung einer vorgegebenen Härtungstemperatur und/oder ultravioletter Strahlung gehärtet wird; und/oder
bei dem die vorgegebene Härtungstemperatur eine Temperatur von 130 °C oder höher ist, vorzugsweise eine Temperatur im Bereich von 130 °C bis 650 °C oder 150 °C bis 550 °C, und noch bevorzugter eine Temperatur im Bereich von 250 °C bis 520 °C; und/oder
bei der die ultraviolette Strahlung, die zur Aushärtung der direkt auf eine oder beide Oberflächen des Glassubstrats aufgebrachten Beschichtungszusammensetzung verwendet wird, UV-C-Strahlung umfasst.

10. Verfahren nach Anspruch 8 oder 9, bei dem die flüssige Beschichtungszusammensetzung ein Lösungsmittel, vorzugsweise ein aprotisches Lösungsmittel, besonders bevorzugt Dialkylether, umfasst; und/oder
bei dem das Polysilazan eine Verbindung der Formel [R¹R²Si-NR³]ₙ ist, wobei einer der Reste R¹, R² und R³ jeweils unabhängig voneinander aus H oder C₁- bis C₄-Alkyl ausgewählt ist und n eine ganze Zahl ist; vorzugsweise wobei das Polysilazan Perhydropolysilazan umfasst.

11. Verfahren nach einem der Ansprüche 8 bis 10, bei dem eine oder beide Oberflächen des Glassubstrats direkt mit der Beschichtungszusammensetzung durch ein Verfahren in Kontakt gebracht wird/werden, das ausgewählt ist aus:
Tauchbeschichten, Schleuderbeschichten, Walzenbeschichten, Sprühbeschichten, Luftzerstäubungssprühen, Ultraschallsprühen und/oder Schlitzdüsenbeschichten;
vorzugsweise wobei eine oder beide Oberflächen des Glassubstrats vor dem Abscheiden der Beschichtungszusammensetzung durch eine oder mehrere Behandlungen gereinigt werden, die umfassen: Abschleifen mit Ceroxid; Waschen mit einer alkalischen wässrigen Lösung;
Waschen mit entionisiertem Wasser; und/oder
Plasmabehandlung.

12. Verfahren nach einem der Ansprüche 8 bis 11, bei dem das Polysilazan in der Beschichtungszusammensetzung in einer Konzentration im Bereich von 0,5 Gew.-% bis 20 Gew.-% vorliegt, vorzugsweise im Bereich von 0,5 Gew.-% bis 10 Gew.-%, besonders bevorzugt im Bereich von 1 Gew.-% bis 5 Gew.-%;
und/oder bei dem die Siliziumoxidschicht oder jede Siliziumoxidschicht 97 % oder mehr Siliziumoxid in Form von SiO₂ umfasst, weiter bevorzugt die Siliziumoxidschicht oder jede Siliziumoxidschicht 98 % oder mehr Siliziumoxid in Form von SiO₂ umfasst.

13. Verwendung einer dichten Siliziumoxidschicht, die direkt auf einer oder beiden Oberflächen eines Substrats aus Kalknatronsilikatglas nach einem der Ansprüche 1 bis 7 oder nach einem der Ansprüche 8 bis 12 abgeschieden ist, als korrosionsbeständige Beschichtung.

14. Badewannenabtrennung und/oder Duschabtrennung, umfassend ein korrosionsbeständig beschichtetes Glassubstrat nach einem der Ansprüche 1 bis 7.

15. Badewannenabtrennung und/oder Duschabtrennung nach Anspruch 14, ferner umfassend Befestigungsmittel zum Befestigen der Badewannenabtrennung und/oder Duschabtrennung in der Gebrauchsposition, wobei die Befestigungsmittel vorzugsweise Klebeabschnitte oder mechanische Befestigungsabschnitte zum Anbringen der Befestigungsmittel an der Spritzwand umfassen.

## Revendications

1. Substrat en verre revêtu résistant à la corrosion utilisable comme un écran de bain et/ou un écran de douche dans un environnement humide comprenant :
i) un substrat de verre de silicate sodocalcique ; et
ii) une couche de silice déposée directement sur les deux surfaces du substrat en verre, dans lequel :
chaque couche de silice est dérivée d'un polysilazane liquide dans la forme de perohydropolysilazane ;
chaque couche de silice comprend 95 % ou plus de silice dans la forme de SiO₂ ;
chaque couche de silice comprend un film non-poreux, continu complètement densifié ; et
chaque couche de silice présente une épaisseur de 75 nm ou supérieure et une épaisseur de 260 nm ou inférieure.

2. Substrat en verre revêtu résistant à la corrosion selon la revendication 1, dans lequel la couche de silice ou chaque couche de silice comprend 97 % ou plus de silice dans la forme de SiO₂, encore mieux la couche de silice ou chaque couche de silice comprend 98 % ou plus de silice dans la forme de SiO₂.

3. Substrat en verre revêtu résistant à la corrosion selon la revendication 1 ou 2, dans lequel le substrat en verre revêtu résistant à la corrosion présente une augmentation de voile de 24 % ou inférieure après 50 jours à 98 % d'humidité relative et 60°C.

4. Substrat en verre revêtu selon l'une quelconque des revendications précédentes, dans lequel la couche de silice ou chaque couche de silice présente une épaisseur dans l'intervalle de 20 nm à 250 nm.

5. Substrat en verre revêtu selon l'une quelconque des revendications 1 à 4, dans lequel la couche de silice ou chaque couche de silice présente un indice de réfraction dans l'intervalle de 1,42 à 1,55.

6. Substrat en verre revêtu selon l'une quelconque des revendications précédentes, dans lequel la couche de silice ou chaque couche de silice comprend de l'azote dans une quantité de 5 % ou inférieure, encore mieux la couche de silice ou chaque couche de silice comprend de l'azote dans une quantité de 3 % ou inférieure ; et/ou dans lequel la couche de silice ou chaque couche de silice comprend de l'azote dans une quantité de 2 % ou inférieure.

7. Substrat en verre revêtu selon l'une quelconque des revendications précédentes, dans lequel la couche de silice déposée directement sur chaque surface du substrat en verre comprend une épaisseur de 20 nm à 200 nm ; et/ou dans lequel le substrat en verre est du verre trempé ; et/ou dans lequel la couche de silice ou chaque couche de silice est/sont l'unique revêtement sur le substrat en verre ; et/ou dans lequel la couche de silice ou chaque couche de silice est/sont non dopés.

8. Procédé pour la production d'un substrat en verre revêtu résistant à la corrosion utilisable comme un écran de bain et/ou un écran de douche dans un environnement humide, le procédé comprenant :
i) la fourniture d'un substrat en verre de silicate sodocalcique ;
ii) la fourniture d'une composition de revêtement liquide comprenant un polysilazane à une concentration de 0,5 % à 80 % en masse ;
iii) la mise en contact des deux surfaces du substrat en verre directement avec la composition de revêtement ; et
iv) le durcissement de la composition de revêtement formant par-là un substrat en verre revêtu résistant à la corrosion présentant une couche de silice non-poreuse, continue, complètement densifiée sur les deux côtés du substrat en verre avec une épaisseur de 75 nm ou supérieure et 260 nm ou inférieure ; et dans lequel chaque couche de silice comprend 95 % ou plus de silice dans la forme de SiO₂.

9. Procédé selon la revendication 8, dans lequel la composition de revêtement est durcie en utilisant une température de durcissement prédéterminée et/ou un rayonnement ultraviolet ; et/ou
dans lequel la température de durcissement prédéterminée est une température de 130°C ou supérieure, de préférence une température dans l'intervalle de 130°C à 650°C ou de 150°C à 550°C, et encore mieux une température dans l'intervalle de 250°C à 520°C ; et/ou
dans lequel le rayonnement ultraviolet utilisé pour faire durcir la composition de revêtement appliquée directement sur une ou les deux surfaces du substrat en verre comprend un rayonnement UV C.

10. Procédé selon la revendication 8 ou 9, dans lequel la composition de revêtement liquide comprend un solvant, de préférence un solvant aprotique, encore mieux un dialkyléther ; et/ou dans lequel le polysilazane est un composé de formule [R¹R²Si-NR³]ₙ, dans laquelle un de R¹, R², et R³ est à chaque fois indépendamment choisi parmi H ou un groupe alkyle en C₁ à C₄, et n est un nombre entier ; de préférence dans lequel le polysilazane comprend un perhydropolysilazane.

11. Procédé selon l'une quelconque des revendications 8 à 10, dans lequel une ou les deux surfaces du substrat en verre est/sont directement mises en contact avec la composition de revêtement par un procédé choisi parmi : revêtement par immersion, revêtement centrifuge, revêtement au rouleau, revêtement par pulvérisation, pulvérisation par atomisation d'air, pulvérisation ultrasonique, et/ou revêtement à filière de fente ; de préférence dans lequel une ou les deux surfaces du substrat en verre sont nettoyées avant le dépôt de la composition de revêtement avec un ou plusieurs traitements comprenant : abrasion avec de l'oxyde de cérium ; lavage avec une solution aqueuse alcaline ; lavage avec rinçage à l'eau désionisée ; et/ou traitement au plasma.

12. Procédé selon l'une quelconque des revendications 8 à 11, dans lequel le polysilazane est à une concentration dans l'intervalle de 0,5 % à 20 % en masse dans la composition de revêtement, de préférence dans l'intervalle de 0,5 % à 10 % en masse, encore mieux dans l'intervalle de 1 % à 5 % en masse ; et/ou dans lequel la couche de silice ou chaque couche de silice comprend 97 % ou plus de silice dans la forme de SiO₂, encore mieux la couche de silice ou chaque couche de silice comprend 98 % ou plus de silice dans la forme de SiO₂.

13. Utilisation d'une couche de silice dense déposée directement sur une ou les deux surfaces d'un substrat de verre de silicate sodocalcique selon l'une quelconque des revendications 1 à 7 ou selon l'une quelconque des revendications 8 à 12 comme un revêtement résistant à la corrosion.

14. Ecran de bain et/ou écran de douche comprenant un substrat en verre revêtu résistant à la corrosion selon l'une quelconque des revendications 1 à 7.

15. Ecran de bain et/ou écran de douche selon la revendication 14, comprenant de plus des fixations pour fixer l'écran de bain et/ou un écran de douche dans une position d'utilisation, de préférence dans lequel les fixations comprennent des portions adhésives ou des portions de fixation mécanique pour fixer les fixations à l'écran aux éclaboussures.
